# EUROPÄISCHE PATENTSCHRIFT

(11) **EP 3 736 234 B1**
(45) Veröffentlichungstag und Bekanntmachung des Hinweises auf die Patenterteilung: **03.07.2024**
(21) Anmeldenummer: 19173819.4
(22) Anmeldetag: 10.05.2019
(51) Int. Cl.: B65G 53/52, B29B 13/06

(54) **FÖRDERANLAGE UND VERFAHREN ZUR PNEUMATISCHEN FÖRDERUNG VON KUNSTSTOFFGRANULAT**
CONVEYOR SYSTEM AND METHOD FOR THE PNEUMATIC CONVEYING OF PLASTIC GRANULATE
INSTALLATION DE TRANSPORT ET PROCÉDÉ DE TRANSPORT PNEUMATIQUE DE GRANULAT PLASTIQUE

(43) Veröffentlichungstag der Anmeldung: 11.11.2020
(73) Patentinhaber: Coperion GmbH, 70469 Stuttgart (DE)
(72) Erfinder: Stark, Bernhard, 88273 Fronreute (DE); Duerr, Michael, 88364 Wolfegg (DE); Vögele, Thomas, 88521 Binzwangen (DE)
(74) Vertreter: Rau, Schneck & Hübner Patentanwälte Rechtsanwälte PartGmbB

(56) Entgegenhaltungen:
- EP-A1- 3 366 618
- EP-A1- 3 401 248
- EP-A2- 0 990 606
- JP-A- H0 379 514
- US-A1- 2007 274 789
- Claudia Schäfle: "Morphologie, Verdampfung und Kondensation von Flüssigkeiten auf benetzungsstrukturierten Oberflächen Dissertation", , 31. Januar 2002 (2002-01-31), Seiten 1-130, XP055641726, Gefunden im Internet: URL:https://d-nb.info/964678632/34 [gefunden am 2019-11-12]

## Beschreibung

Die Erfindung betrifft eine Förderanlage und ein Verfahren zur pneumatischen Förderung von Kunststoffgranulat.

Die JP H03 79514 A offenbart ein Verfahren und eine Vorrichtung zum Kühlen von erhitztem Pulver in einer pneumatischen Förderanlage.

US 2007/0274789 A1 offenbart ein Verfahren und eine Anlage zum Kristallisieren von Polyester-Granulat bei der pneumatischen Förderung.

Aus der EP 3 366 618 A1 ist eine Förderanlage zum Fördern von Kunststoffgranulat bekannt, wobei zur Verbesserung der Förderbedingungen entlang einer Förderleitung Flüssigkeit zum Befeuchten des Fördergases und/oder des zu fördernden Kunststoffgranulats hinzugegeben wird.

EP 3 366 618 A1 offenbart eine Förderanlage zur pneumatischen Förderung von Kunststoffgranulat mittels feuchtem Fördergas nach dem Oberbegriff des Anspruchs 1.

Es ist die Aufgabe der vorliegenden Erfindung, die Förderbedingungen für eine derartige Förderanlage weiter zu verbessern.

Diese Aufgabe ist erfindungsgemäß gelöst durch eine Förderanlage mit den im Anspruch 1 angegebenen Merkmalen sowie durch ein Verfahren mit den im Anspruch 12 angegebenen Merkmalen.

Erfindungsgemäß wurde erkannt, dass im Fördergas enthaltene Feuchtigkeit zumindest entlang eines Abschnitts einer Förderleitung für verbesserte Förderbedingungen gezielt kondensiert werden kann. Durch zumindest teilweise Kondensation der Feuchtigkeit kann sich ein Flüssigkeitsfilm an einer Innenwand der Förderleitung bilden. Der Flüssigkeitsfilm dient als Gleitfilm für das Kunststoffgranulat. Durch den Gleitfilm wird die Reibung der Partikel des Kunststoffgranulats an der Innenwand der Förderleitung reduziert. Der erforderliche Förderdruck für die pneumatische Förderung des Kunststoffgranulats ist reduziert. Dadurch kann die pneumatische Förderung mit verbesserter Prozess-Stabilität und insbesondere bei Verminderung von Förderdruckspitzen, durchgeführt werden. Die Entstehung von Abrieb an dem Kunststoffgranulat ist reduziert und insbesondere verhindert.

Die Förderleitung ist insbesondere eine Rohrleitung, wobei die Rohrleitung insbesondere einen kreisförmigen Innenquerschnitt aufweist. Es sind auch andere Querschnittsgestaltungen denkbar.

Eine wesentliche Erkenntnis der Erfindung besteht darin, dass der Gleitfilm mittels einer Kondensations-Temperiereinheit gezielt eingestellt werden kann, indem die Förderleitung gezielt temperiert wird. Die Kondensations-Temperiereinheit kann aktiv und/oder passiv ausgeführt sein, also aktive und/oder passive Elemente aufweisen. Nach der Erfindung ist die Kondensations-Temperiereinheit abschnittsweise entlang der Förderleitung angeordnet. Insbesondere ist die Kondensations-Temperiereinheit entlang eines vorderen Abschnitts der Förderleitung angeordnet. Insbesondere ist die Kondensations-Temperiereinheit im Bereich eines Aufgabeorts oder benachbart zu dem Aufgabeort angeordnet, an dem das Kunststoffgranulat mit druckbeaufschlagtem Fördergas in die Förderleitung aufgegeben wird. Nach der Erfindung erstreckt sich die Kondensations-Temperiereinheit ausgehend von dem Aufgabeort entlang der Förderleitung über mindestens 20 % der Gesamtlänge der Förderleitung, insbesondere über mindestens 40 % der Gesamtlänge der Förderleitung, insbesondere über mindestens 50 % der Gesamtlänge der Förderleitung, insbesondere über mindestens 70 % der Gesamtlänge der Förderleitung und insbesondere über mindestens 90 % der Gesamtlänge der Förderleitung. Es ist auch denkbar, dass die Kondensations-Temperiereinheit entlang der gesamten Länge der Förderleitung angeordnet ist. Es ist auch denkbar, dass die Kondensations-Temperiereinheit beabstandet zu dem Aufgabeort und insbesondere beabstandet zu dem Zielort an der Förderleitung ausgeführt ist.

Das geförderte Kunststoffgranulat kann in einem vorangegangenen Granulationsprozess hergestellt worden sein. In einem der Granulation nachfolgenden Kristallisationsprozess kann der Aufbau des Polymers modifiziert werden. Das so hergestellte Kunststoffgranulat wird in der Förderanlage von dem Aufgabeort zu dem Zielort gefördert. Zusätzliche Herstellschritte oder Bearbeitungsschritte zur Fertigstellung des Kunststoffgranulats sind, insbesondere innerhalb der Förderanlage, nicht erforderlich. Das Kunststoffgranulat ist fertig hergestellt am Aufgabeort verfügbar. Das Kunststoffgranulat weist einen äquivalenten Teilchendurchmesser von 2 mm bis 5 mm einer volumengleichen Kugel auf.

Als Kunststoffgranulat dienen Polyolefine, insbesondere Polyethylen (PE) oder Polypropylen (PP). Erfindungsgemäß wurde erkannt, dass die resultierenden Förderbedingungen in der Förderanlage durch die Schüttguteigenschaften des jeweiligen Kunststoffgranulats beeinflusst werden. Die Schüttguteigenschaften sind insbesondere abhängig von jeweils zugegebenen Additiven in dem Kunststoffgranulat, das beispielsweise weich, hart, spröde oder brüchig sein kann, so dass das Reibungsverhalten von sehr gut gleitend bis fast klebend und/oder das Feuchteverhalten von Feuchte abstoßend, Feuchte aufnehmend, nur Oberflächenfeuchte und/oder in das Granulatkorn eindringende Feuchte und das jeweilige Trocknungsverhalten für die verschiedenen Kunststoffmaterialien unterschiedlich ausgeprägt ist. Durch die gezielte Einstellbarkeit des Gleitfilms, können die jeweiligen Förderbedingungen in der Förderanlage gezielt und auf das jeweilige Kunststoffmaterial angepasst eingestellt werden.

Als Fördergas dient insbesondere Luft.

Als feuchtes Fördergas im Sinne der Erfindung ist Fördergas zu verstehen mit einer relativen Feuchte von mindestens 60 % und höchstens 200 %. Die relative Feuchte ist dabei definiert als das Verhältnis der Masse des im Fördergas enthaltenen Dampfes der Flüssigkeit zur größtmöglichen Masse an Dampf dieser Flüssigkeit, die das Fördergas unter den gegebenen Bedingungen mit Druck und Temperatur aufnehmen kann. Bei einer relativen Feuchte von 100 % liegt also eine vollständige Sättigung des Fördergases mit der Flüssigkeit vor. Eine weitere Zugabe der Flüssigkeit führt zu einer Übersättigung des Fördergases. Es ist insbesondere möglich, das Fördergas entlang der Förderleitung mit der Flüssigkeit zu übersättigen, um ein Auskondensieren der Flüssigkeit an der Innenwand der Förderleitung zu begünstigen.

Als Zielort der Förderanlage ist insbesondere ein Bereich zu verstehen, in dem die Verpackung und/oder Verladung des Kunststoffgranulats in einen Verpackungsbehälter oder einen Transportbehälter erfolgt. Ein Transportbehälter kann ein transportierbarer Behälter wie beispielsweise ein Container sein. Am Zielort ist insbesondere mindestens ein Zielbehälter vorgesehen, um eine Zwischenspeicherung des geförderten Kunststoffgranulats am Zielort zu ermöglichen. Ein Zielbehälter ist in diesem Sinne ein stationäres oder mobiles Aufnahmegefäß, in dem das Kunststoffgranulat zumindest vorübergehend, mittelfristig oder langfristig bevorratet werden kann. Ein Zielbehälter ist insbesondere ein Speichersilo. Ein Zielbehälter weist beispielsweise ein Aufnahmevolumen von mindestens 1 m³, insbesondere mindestens 100 m³ und insbesondere mindestens 1000 m³ auf. Ein Zielbehälter kann aber auch ein auf einem Fahrzeug transportierbarer Behälter, insbesondere für einen Lastkraftwagen oder ein Schienenfahrzeug sein.

Untersuchungen der Anmelderin haben gezeigt, dass eine kühle Umgebungstemperatur, die insbesondere eine geringe Temperatur an der Innenwand der Förderleitung bewirkt, Niederschlag von Kondensat aus der Strömung des feuchten Fördergase an der Innenwand der Förderleitung begünstigt. Diese Wandkondensation ermöglicht einen zusätzlichen und sehr effektiven Transportmechanismus für die Feuchtigkeit. Insbesondere wirkt dieser Transportmechanismus zusätzlich zu der Strömung der Flüssigkeit als Film, Strähne und/oder Tropfen. Der Transport der Flüssigkeit erfolgt typischerweise durch Verschleppung mit dem Kunststoffgranulat. Durch die Wandkondensation wird die Verteilung der Feuchte über den Innenumfang der Förderleitung und entlang der Länge der Förderleitung begünstigt. Die ohnehin mittransportierte Flüssigkeit wird effektiver genutzt. Die Förderbedingungen sind verbessert.

Insbesondere dient die Förderanlage zur pneumatischen Förderung durch Flugförderung oder Strähnenförderung. Bei der Flugförderung oder Strähnenförderung ist die Geschwindigkeit des Fördergases vergleichsweise hoch, insbesondere höher als bei der Pfropfenförderung, und beträgt insbesondere mindestens 10 m/s, insbesondere mindestens 12 m/s, insbesondere mindestens 14 m/s, insbesondere mindestens 16 m/s, insbesondere mindestens 18 m/s, insbesondere mindestens 20 m/s, insbesondere mindestens 22 m/s und insbesondere mindestens 25 m/s, jeweils bezogen auf die leere Förderleitung. Die Beladung, also das Verhältnis von Kunststoffgranulat zu Fördergas, ist insbesondere kleiner als 30 kg/kg, insbesondere kleiner als 25 kg/kg, insbesondere kleiner als 20 kg/kg, insbesondere kleiner als 15 kg/kg, insbesondere kleiner als 12 kg/kg und insbesondere kleiner als 10 kg/kg.

Eine Förderanlage gemäß Anspruch 2 ermöglicht die gezielte Unterdrückung und/oder Vermeidung von Kondensatbildung in einem Zielabschnitt der Förderleitung. Dies wird dadurch erreicht, dass entlang des Zielabschnitts die Förderleitung ohne die Kondensations-Temperiereinheit ausgeführt ist.

Zusätzlich oder alternativ kann eine Verdunstungs-Temperiereinheit entlang des Zielabschnitts vorgesehen sein, um die Kondensatbildung zu verhindern. Es wurde gefunden, dass beispielsweise durch die Restwärme des Kunststoffgranulats die Flüssigkeit, die sich beispielsweise an der Innenwand der Förderleitung und/oder an dem Kunststoffgranulat befindet, verdunsten kann. Das Risiko, dass die Feuchte bis an den Zielort und insbesondere bis in den mindestens einen Zielbehälter gelangt, ist dadurch reduziert und insbesondere verhindert. Die Verdunstungs-Temperiereinheit kann aktive und/oder passive Elemente aufweisen wie beispielsweise eine Isolierschicht mit, insbesondere elektrischer, Heizung, einen Doppelrohrapparat mit Wärmeträgerflüssigkeit, einen Infrarot-Strahler im Inneren der Förderleitung zur gezielten Wärmeeinbringung auf die Innenwand der Förderleitung und/oder eine Erwärmung der Förderleitung mittels Peltier-Elementen. Der Zielabschnitt weist insbesondere eine Zielabschnitts-Länge derart auf, dass eine Förderdruckdifferenz entlang des Zielabschnitts höchstens 30 % eines Gesamtförderdruckes beträgt. Insbesondere beträgt die Förderdruckdifferenz entlang des Zielabschnitts höchstens 20 % des Gesamtförderdruckes und insbesondere höchstens 10 % des Gesamtförderdruckes.

Ein passives Element für die Kondensations-Temperiereinheit der Förderanlage gemäß Anspruch 3 ermöglicht eine unaufwendige Ausführung. Der apparative Aufwand für die Bereitstellung der Kondensations-Temperiereinheit ist unaufwendig. Ein passives Element ist insbesondere ein Beschattungselement, das oberhalb der Förderleitung angeordnet ist und Schutz vor Umgebungseinflüssen wie Sonneneinstrahlung, Wind und Niederschlag wie Regen, Hagel und/oder Schnee gewährleistet. Das Beschattungselement kann als festinstalliertes Dach, insbesondere als Giebeldach oder als Pultdach, ausgeführt sein. Ein Beschattungselement kann auch durch textile Elemente in Form von Planen erfolgen. Das passive Beschattungselement kann veränderlich anordenbar ausgeführt sein, indem beispielsweise der Neigungswinkel der Dachfläche gegenüber der Förderleitung veränderbar ist.

Zusätzlich oder alternativ kann ein textiles Beschattungselement ein-/ ausrollbar ausgeführt sein, um insbesondere die Größe der beschatteten Fläche, insbesondere den Längenabschnitt der Förderleitung, der beschattet wird, veränderlich einzustellen.

Zusätzlich oder alternativ kann die Kondensations-Temperiereinheit ein thermisches Isolierungselement aufweisen, das insbesondere als thermische Isolationsschicht an einer Außenseite der Förderleitung angebracht ist. Das thermische Isolierungselement erstreckt sich insbesondere entlang des gesamten Außenumfangs oder zumindest über 300° in Umfangsrichtung der Längsachse der Förderleitung, insbesondere mindestens 270°, insbesondere mindestens 225° und insbesondere mindestens 180°.

Das thermische Isolierungselement ist insbesondere aus einem Isolationsmaterial hergestellt wie beispielsweise Mineralwolle. Mineralwolle dient insbesondere zur Wärmeisolation. Vorteilhaft ist es, wenn das Isolationsmaterial zur Wärmeisolation eine Wärmeleitfähigkeit von 0,02 W/mK bis 0,06 W/mK aufweist.

Zur Kälteisolation kann als Isolationsmaterial beispielsweise Polystyrolschaum (XPS) und/oder Polyurethan (PUR) verwendet werden. Die Isolationsmaterialien zur Kälteisolation weisen vorteilhafterweise eine Wärmeleitfähigkeit in einem Bereich von 0,02 W/mK bis 0,05 W/mK auf. Die thermische Isolationsschicht weist vorteilhafterweise eine Schichtdicke zwischen 30 mm bis 150 mm auf. Die Schichtdicke der thermischen Isolationsschicht hängt insbesondere von der Temperatur des Kunststoffgranulats und/oder vom Durchmesser der Förderleitung ab.

Untersuchungen der Anmelderin haben gezeigt, dass es vorteilhaft ist, bestimmte Abschnitte der Förderleitung gezielt von thermischen Isolierelementen auszusparen. Insbesondere vorteilhaft ist es, wenn Rohrbögen der Förderleitung ohne thermische Isolierelemente ausgeführt sind, damit Reibungswärme zwischen dem Granulatkorn und der Rohrleitungsinnenwand an die Umgebung besser abgeführt werden kann.

Zusätzlich oder alternativ kann ein passives Element auch ein passives Kühlelement sein, beispielsweise in Form von Kühlrippen, die an einer Außenseite der Förderleitung statisch angeordnet sind. Über die Kühlrippen kann Wärme von der Förderleitung effektiv und vereinfacht an die Umgebung abgeführt werden.

Ein aktives Element der Kondensations-Temperiereinheit der Förderanlage gemäß Anspruch 4 ermöglicht eine unmittelbare Beeinflussung der Temperatur an der Innenwand der Förderleitung. Ein aktives Element begünstigt eine gezielte Temperaturführung der Förderleitung. Insbesondere kann die Temperatur an der Innenwand der Förderleitung gezielt eingestellt und insbesondere eine Soll-Temperatur, insbesondere ein Soll-Temperaturbereich, eingehalten werden. Ein aktives Element ist beispielsweise ein aktives Kühlelement, insbesondere in Form eines Kühlaggregats und/oder ein Wärmetauscher.

Ein aktives Element kann zusätzlich oder alternativ als Heizelement ausgeführt sein.

Ein aktives Element ist insbesondere als Wärmetauscher ausgeführt. Ein Wärmetauscher kann abschnittsweise als Doppelrohrapparat ausgeführt sein mit einem zusätzlichen Rohr, dass die Förderleitung von außen umgibt. Zwischen der Innenwand des zusätzlichen Rohrs und der Außenwand der Förderleitung wird ein Zwischenraum gebildet, durch den ein Wärmeträgerfluid, insbesondere eine Flüssigkeit, insbesondere Wasser, strömt. In Abhängigkeit der Temperatur des Wärmeträgerfluids kann der Wärmetauscher zum Heizen oder zum Kühlen der Förderleitung dienen.

Insbesondere weist das zusätzliche Rohr eine Querschnittskontur auf, die der Kontur der Förderleitung entspricht. Insbesondere ist das zusätzliche Rohr konzentrisch zur Förderleitung angeordnet. Insbesondere ist der Zwischenraum ringförmig ausgeführt. Der Abstand zwischen der Innenwand des zusätzlichen Rohrs und der Außenwand der Förderleitung ist entlang des Umfangs des Zwischenraums konstant.

Insbesondere wird der Doppelrohrapparat im Gegenstrom betrieben. Das bedeutet, dass die Strömungsrichtung des Wärmeträgerfluids der Förderrichtung des Fördergases entgegen gerichtet ist. Dadurch wird erreicht, dass die Abkühlung am Beginn des Doppelrohrapparats am effektivsten ist, wo eine druckinduzierte Übersättigung des Fördergases am geringsten ist. Es ist auch denkbar, den Doppelrohrapparat im Gleichstrom zu betreiben. Als Wärmeträgerfluid kann insbesondere auch ein Temperieröl dienen. Der Doppelrohrapparat kann zum aktiven Kühlen oder zum aktiven Heizen eingesetzt werden.

Wenn das aktive Kühlelement als Doppelrohrapparat mit Kühlflüssigkeit ausgeführt ist, kann dieser vorteilhaft an ein Kühlwassernetz angeschlossen werden. Der Betrieb des aktiven Kühlelements ist dadurch unkompliziert und unaufwendig möglich.

Es ist denkbar, die aktiven Elemente entlang der Förderleitung abschnittsweise mit unterschiedlichen Wärmeträgerfluid-Temperaturen zu betreiben, also mit unterschiedlichen Kühlflüssigkeitstemperaturen oder mit unterschiedlichen Warmwasser- oder Temperieröl-Temperaturen. Die verschiedenen Wärmeträgerfluid-Temperaturen ermöglichen eine abschnittsweise veränderliche Anpassung und Einstellung der Temperatur an der Innenwand der Förderleitung.

Eine Regelungseinheit der Förderanlage gemäß Anspruch 5 erhöht die Zuverlässigkeit der Förderbedingungen mit der Förderanlage. Dadurch, dass die Temperatur an der Innenwand der Förderleitung gezielt eingestellt und in einem gewünschten Soll-Temperaturbereich zuverlässig gehalten werden kann, ist eine gezielte Bildung und Beibehaltung des Gleitfilms möglich. Vorteilhaft ist es, wenn mehrere Temperatursensoren vorgesehen sind, um insbesondere die Umgebungstemperatur, die Temperatur an der Innenwand der Förderleitung und die Temperatur in der Förderleitung zu messen. Zusätzlich ist ein Sensor vorgesehen, um den Feuchtegehalt in der Förderleitung und/oder in einer Druckgasleitung zu messen. Die Druckgasleitung ist insbesondere an den Aufgabeort angeschlossen und dient zur Aufgabe des Fördergases in die Förderleitung mit Druck. Diese Sensoren stehen in Signalverbindung mit der Regelungseinheit. Die von den Sensoren übermittelten Messwerte dienen als Eingangsgrößen, insbesondere als Stellgrößen für das Regelungsverfahren. Insbesondere steht die Regelungseinheit mit der Kondensations-Temperiereinheit, insbesondere mit dem mindestens einen passiven Element und/oder mit dem mindestens einen aktiven Element zur gezielten Temperierung der Förderleitung und damit zur Regelung der Temperatur an der Innenwand der Förderleitung in Signalverbindung.

Eine Verteilungseinheit der Förderanlage gemäß Anspruch 6 ermöglicht die vorteilhafte Nutzung des Gleitfilms, indem der Gleitfilm gezielt an der Innenwand der Förderleitung verteilt wird. Insbesondere ist mindestens eine Verteilungseinheit vorgesehen. Entlang der Förderleitung können mehrere Verteilungseinheiten, insbesondere hintereinander und insbesondere beabstandet zueinander, angeordnet sein. Durch das gezielte Anordnen der Verteilungseinheiten können die Förderbedingungen entlang der Förderleitung abschnittsweise gezielt eingestellt werden.

Ausgestaltungen der Verteilungseinheit der Förderanlage gemäß den Ansprüchen 7 bis 9 haben sich als besonders vorteilhaft hinsichtlich der Bildung und/oder Aufrechterhaltung des Gleitfilms erwiesen.

Eine hydrophile Benetzungsoberfläche der Förderanlage gemäß Anspruch 10 kann an sämtlichen Abschnitten der Innenwand der Förderleitung, insbesondere abschnittsweise und insbesondere in Abschnitten, in welchen keine Verteilungseinheit vorgesehen ist, ausgeführt sein.

Eine Befeuchtungseinheit der Förderanlage gemäß Anspruch 11 vereinfacht die Zugabe von Flüssigkeit, insbesondere von Wasser. Die Befeuchtungseinheit dient zum Befeuchten des Fördergases und/oder des Kunststoffgranulats. Mittels der

Befeuchtungseinheit ist es insbesondere möglich, dem Kunststoffgranulat und/oder dem Fördergas eine solche Menge an Flüssigkeit zuzugeben, dass das Fördergas während der Förderung zumindest bereichsweise entlang der Förderleitung mit der Flüssigkeit übersättigt ist. Als Flüssigkeit zum Befeuchten des Fördergases und/oder des Kunststoffgranulats dient insbesondere Wasser, insbesondere demineralisiertes Wasser. Die Befeuchtungseinheit umfasst insbesondere einen separaten Flüssigkeitsanschluss, um die Flüssigkeit unmittelbar dem Fördergas und/oder dem Kunststoffgranulat zuzugeben. Es können mehrere Befeuchtungseinheiten vorgesehen sein, die insbesondere entlang des Förderweges, insbesondere an der Förderleitung, angeordnet sind. Es ist zusätzlich oder alternativ möglich, dass die Befeuchtungseinheit integral dadurch gebildet ist, dass bereits feuchtes Kunststoffgranulat dem Fördergas zugegeben wird, so dass die Voraussetzungen für die pneumatische Förderung unter Feuchtezugabe gewährleistet sind. Eine Flüssigkeitszufuhr aus einem separaten Flüssigkeitsanschluss kann in diesem Fall entbehrlich sein. Als feuchtes Kunststoffgranulat kann insbesondere Polyolefin-Granulat dienen, das nach einer Unterwasser-Granulierung nicht oder lediglich unvollständig getrocknet worden ist, insbesondere durch mechanische Entwässerung. Der apparative Aufwand für die Befeuchtung ist durch die Verwendung von feuchtem Kunststoffgranulat reduziert.

Das Verfahren gemäß Anspruch 12 nutzt die Erkenntnis, dass die Gleitfilmbildung an der Innenwand der Förderleitung durch eine gezielte Temperierung eingestellt werden kann.

Ein Verfahren gemäß Anspruch 13 gewährleistet einen für die Förderbedingungen besonders vorteilhaften Temperaturbereich. Es wurde erkannt, dass die Temperatur an der Innenwand der Förderleitung einerseits und die Temperatur der Förderströmung die Gleitfilmbildung beeinflussen. Die Temperatur der Förderströmung ist eine Mischtemperatur aus der Temperatur des Fördergases und der Temperatur des Kunststoffgranulats. Es wurde gefunden, dass ein Temperaturgradient von der Temperatur der Förderströmung, also im Inneren der Förderleitung, zu der Temperatur an der Innenwand der Förderleitung, dann vorteilhaft ist, wenn er in einem Bereich von -100 K bis + 30 K liegt. Bei einer Temperatur der Förderströmung von beispielsweise 150° C beträgt der vorteilhafte Temperaturbereich an der Innenwand der Förderleitung 50° C bis 180° C. Besonders vorteilhaft haben sich ein Temperaturbereich für die Temperatur an der Innenwand der Förderleitung von weniger als 30° C als die Temperatur der Förderströmung bis zum Wert der Temperatur der Förderströmung und insbesondere ein Temperaturbereich von weniger als 15° C als die Temperatur der Förderströmung bis zum Wert der Temperatur der Förderströmung erwiesen.

Eine Regelung der Temperatur an der Innenwand der Förderleitung ermöglicht eine zuverlässige Gleitfilmbildung.

Ein Verfahren gemäß Anspruch 14 ermöglicht eine zuverlässige Kondensatvermeidung entlang eines Zielabschnitts der Förderleitung.

Das Zugeben von Flüssigkeit mittels einer Befeuchtungseinheit eines Verfahrens gemäß Anspruch 15 vereinfacht das Befeuchten des Fördergases und/oder des Kunststoffgranulats.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung einer erfindungsgemäßen Förderanlage mit einer Kondensations-Temperiereinheit mit passiven Elementen,
- Fig. 2: eine schematische Querschnittdarstellung gemäß Schnittlinie II - II in Fig. 1,
- Fig. 3: eine perspektivische, teilgeschnittene Ansicht der pneumatischen Förderung von Kunststoffgranulat in der Förderleitung,
- Fig. 4: eine Fig. 1 entsprechende Darstellung einer Förderanlage gemäß einer weiteren Ausführungsform mit passiven Elementen in Form von thermischen Isolierungselementen,
- Fig. 5: eine schematische Querschnittsdarstellung gemäß Schnittlinie V - V in Fig. 4,
- Fig. 6: eine Fig. 1 entsprechende Darstellung einer Förderanlage gemäß einer weiteren Ausführungsform mit passiven Elementen,
- Fig. 7: eine Fig. 1 entsprechende Darstellung einer Förderanlage gemäß einer weiteren Ausführungsform mit aktiven Kühlelementen für die Kondensations-Temperiereinheit und mit einer Verdunstungs-Temperiereinheit,
- Fig. 8: eine schematische perspektivische Ansicht der Förderleitung mit einer Verteilungseinheit in Form von Drallblechen,
- Fig. 9: eine Schnittdarstellung gemäß Schnittlinie IX-IX in Fig. 8,
- Fig. 10: eine Fig. 8 entsprechende Darstellung, wobei die Verteilungseinheit ein Umleitelement in Form einer Leitnut aufweist, und
- Fig. 11: eine Fig. 8 entsprechende Darstellung mit der Verteilungseinheit als Gaseinblaselement.

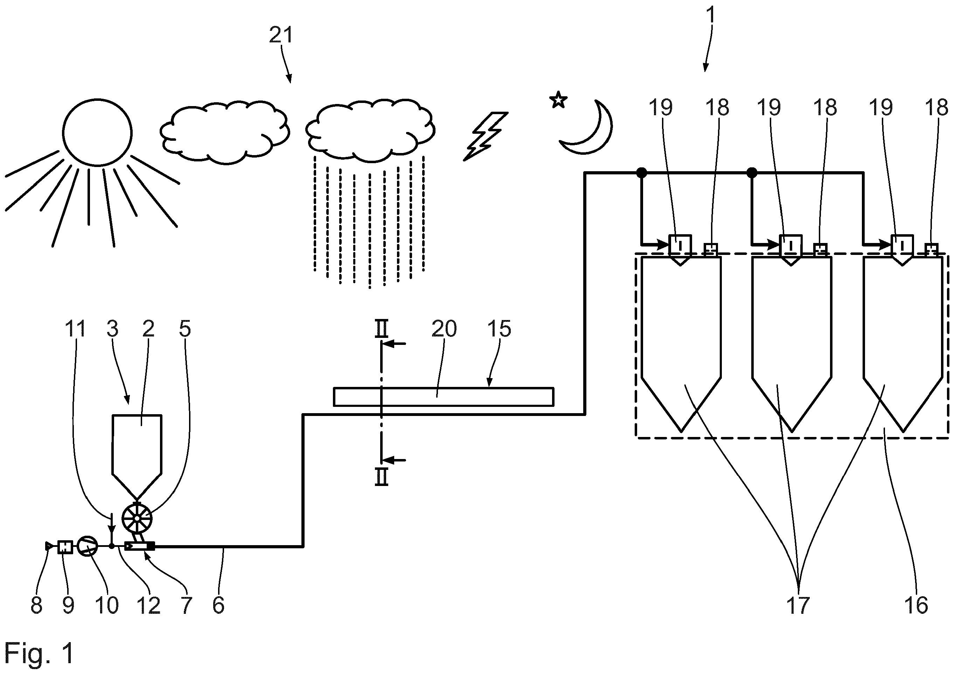

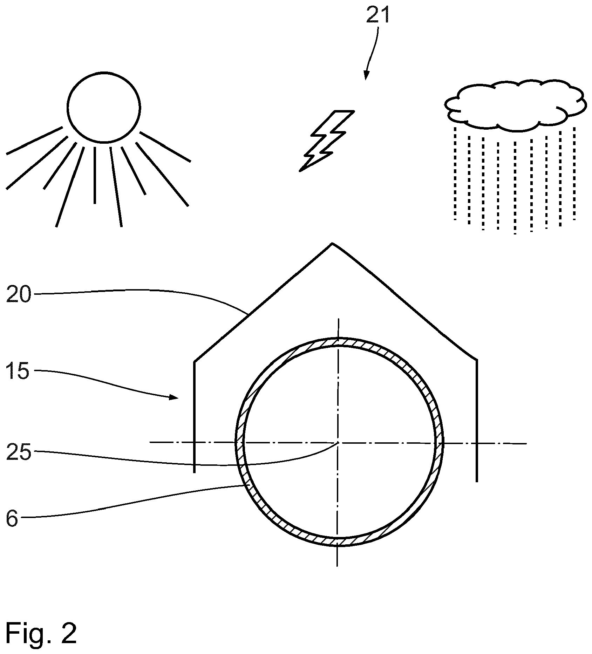

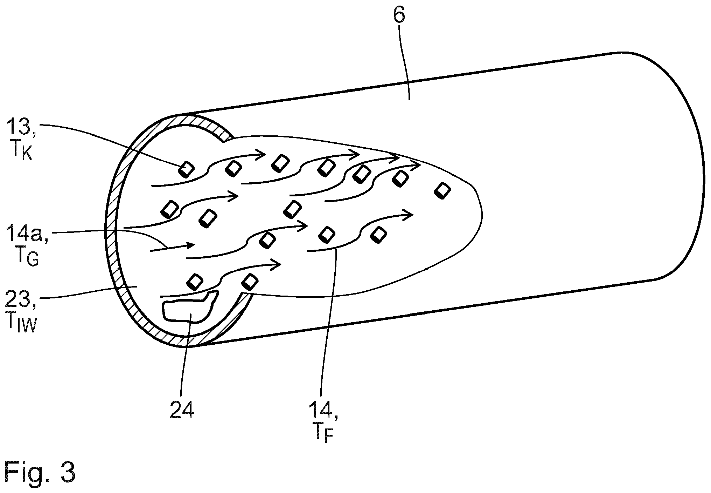

Eine in Fig. 1 bis 3 insgesamt mit 1 gekennzeichnete Förderanlage dient zur pneumatischen Förderung, insbesondere zur Flugförderung oder Strähnenförderung, von Kunststoffgranulat, das in einem Behälter 2 bevorratet ist. Der Behälter 2 ist an einem Speicherort 3 angeordnet.

Mittels einer Aufgabe-Dosiereinheit 5, die gemäß dem gezeigten Ausführungsbeispiel als Zellenradschleuse ausgeführt ist, wird das Kunststoffgranulat aus dem Behälter 2 einer Förderleitung 6 an einem Aufgabeort 7 dosiert zugeführt.

Es können auch mehrere Behälter 2 vorgesehen sein, die jeweils mittels einer separaten Aufgabe-Dosiereinheit 5 an die Förderleitung 6 angeschlossen sind. Das Kunststoffgranulat kann aber auch vordosiert aus einem vorgelagerten Prozess, insbesondere in einer Granuliereinrichtung nach einem Extruder, anfallen.

An dem Aufgabeort 7 wird das der Förderleitung 6 zugeführte Kunststoffgranulat mit druckbeaufschlagtem Fördergas beaufschlagt. Das Fördergas ist Luft. Die Förderluft wird aus einer Druckluftquelle 8 durch einen Filter 9 und einen Druckerzeuger 10 beispielsweise in Form eines Verdichters oder eines Gebläses bereitgestellt.

Gemäß dem gezeigten Ausführungsbeispiel ist stromaufseitig des Aufgabeortes 7 eine Befeuchtungseinheit 11 an eine Druckluftleitung 12 angeschlossen. Die Druckluftleitung 12 verbindet die Druckluftquelle 8 mit dem Aufgabeort 7 und mündet in die Förderleitung 6. Entlang der Druckluftleitung 12 wird bis zur Flüssigkeitszuführung durch die Befeuchtungseinheit 11 Druckluft transportiert. Durch die Flüssigkeitszugabe wird die Druckluft befeuchtet und als feuchtes Fördergas zum Aufgabeort 7 gefördert.

Entlang der Förderleitung 6 strömt das Gemisch aus Kunststoffgranulat 13 und dem feuchten Fördergas 14. Die Strömungsrichtung des Gemischs ist durch den Strömungspfeil 14a charakterisiert. Entlang der Förderleitung 6 entspricht die Strömungsrichtung des Fördergases 14 der Strömungsrichtung des Kunststoffgranulats 13.

Zusätzlich oder alternativ zu der Befeuchtungseinheit 11 kann mindestens eine weitere Befeuchtungseinheit stromabseitig des Aufgabeorts 7, insbesondere entlang der Förderleitung 6, angeordnet sein. Es ist möglich, auf die Befeuchtung durch eine zusätzliche Flüssigkeitszufuhr zu verzichten, wenn beispielsweise feuchtes Kunststoffgranulat gefördert wird, dessen Feuchte zur Befeuchtung des Fördergases verwendet wird. Als Befeuchtungseinheit wird in diesem Fall das feuchte Kunststoffgranulat verstanden, das Flüssigkeit an das Fördergas abgibt.

Entlang der Förderleitung 6 ist abschnittsweise eine Kondensations-Temperiereinheit 15 angeordnet. Die Kondensations-Temperiereinheit 15 ist entlang der Förderleitung 6 zwischen dem Aufgabeort 7 und einem Zielort 16 angeordnet. Der Zielort 16 ist über die Förderleitung 6 mit dem Aufgabeort 7 fördertechnisch verbunden. Am Zielort 16 sind gemäß dem gezeigten Ausführungsbeispiel drei Zielbehälter 17 angeordnet. Jeder Zielbehälter 17 weist einen Abluftfilter 18 und ein Zuführorgan 19 zum Zuführen des Kunststoffgranulats aus der Förderleitung 6 auf.

Gemäß dem gezeigten Ausführungsbeispiel weist die Kondensations-Temperiereinheit 15 ein passives Element in Form eines Beschattungselements 20 auf. Das Beschattungselement 20 ist als Giebeldach ausgeführt. Das Beschattungselement 20 schützt die darunter angeordnete Förderleitung 6 vor äußeren Umgebungseinflüssen 21, die in Fig. 1 symbolisch dargestellt sind. Die äußeren Umgebungseinflüsse 21 können Temperaturveränderungen in der Umgebung bewirken und/oder direkt auf die Förderleitung 6 beispielweise in Form direkter Sonneneinstrahlung oder in Form von Regen auf die Förderleitung 6 einwirken. Eine Veränderung der Umgebungstemperatur beeinflusst die Temperatur an und in der Förderleitung 6. Relevante Umgebungseinflüsse 21 sind beispielsweise Sonneneinstrahlung, Bewölkung, Niederschlag wie Regen, Hagel, Schnee, Sturm, Gewitter sowie ein Wechsel der Tageszeiten und/oder Jahreszeiten.

Nach der Erfindung erstreckt sich die Kondensations-Temperiereinheit 15 entlang einer Länge, die größer ist als 20 % der Gesamtlänge der Förderleitung 6. Die Gesamtlänge der Förderleitung 6 ergibt sich aus dem Förderpfad zwischen dem Aufgabeort 7 und dem Zielort 16. Die Gesamtlänge der Förderleitung 6 entspricht der Summe der Einzellängen der verschiedenen Förderleitungsabschnitte. Die Kondensations-Temperiereinheit 15 kann sich auch über mindestens 50 % der Gesamtlänge der Förderleitung erstrecken, insbesondere über mindestens 60 %, insbesondere über mindestens 70 %, insbesondere über mindestens 80 %, insbesondere über mindestens 90 % und insbesondere über die gesamte Förderlänge der Förderleitung 6 erstrecken.

Die Kondensations-Temperiereinheit ist in einem Abschnitt der Förderleitung 6 angeordnet, der sich unmittelbar an den Aufgabeort 7 anschließt.

Insbesondere ist ein Anfangsabschnitt der Förderleitung 6 vorgesehen, der zwischen dem Aufgabeort 7 und dem Beginn der Kondensations-Temperiereinheit 15 angeordnet ist. In dem Anfangsabschnitt ist insbesondere keine Kondensations-Temperiereinheit 15 angeordnet. Die Länge des Anfangsabschnitts der Förderleitung 6 beträgt insbesondere mindestens 2 % der Gesamtlänge der Förderleitung 6, insbesondere mindestens 5 % der Gesamtlänge der Förderleitung 6, insbesondere mindestens 10 % der Gesamtlänge der Förderleitung 6, insbesondere mindestens 20 % der Gesamtlänge der Förderleitung 6 und insbesondere mindestens 50 % der Gesamtlänge der Förderleitung 6.

Gemäß dem gezeigten Ausführungsbeispiel ist die Kondensations-Temperiereinheit 15 in einem Bereich angeordnet, in dem die Förderleitung 6 horizontal verläuft. Die Kondensations-Temperiereinheit 15 kann auch in allen anderen Abschnitten der Förderleitung 6 angeordnet sein, insbesondere auch dort, wo die Förderleitung 6 gegenüber der Horizontalen geneigt und insbesondere vertikal orientiert ist.

Im Folgenden wird die pneumatische Förderung des Kunststoffgranulats 13 in der Förderanlage 1 näher erläutert. Das Kunststoffgranulat 13 wird aus dem Behälter 2 mittels der Aufgabe-Dosiereinheit 5 am Aufgabeort 7 der Förderleitung 6 aufgegeben und über die Druckluftleitung 12 mit befeuchtetem Fördergas 14 mit Druck beaufschlagt. Das mit Druck beaufschlagte Fördergas 14 und das Kunststoffgranulat 13 werden entlang der Förderleitung 6 von dem Aufgabeort 7 zu den Zielbehältern 17 am Zielort 16 pneumatisch gefördert, insbesondere durch Flugförderung oder Strähnenförderung. Die Befeuchtung des Fördergases erfolgt insbesondere derart, dass das Fördergas übersättigt ist, also eine relative Feuchte von mehr als 100 % aufweist. Der Sättigungszustand des Fördergases ist insbesondere abhängig von Druck und Temperatur in der Förderleitung 6.

Insbesondere durch die Temperierung der Förderleitung 6 mittels der Kondensations-Temperiereinheit 15 werden die Förderbedingungen in der Förderleitung 6 derart gezielt beeinflusst, dass das Fördergas in einem übersättigten Zustand vorliegt, so dass die Flüssigkeit im Fördergas auskondensiert. Die auskondensierte Flüssigkeit schlägt sich an einer Innenwand 23 der Förderleitung 6 nieder und bildet einen Flüssigkeitsfilm 24, der als Gleitfilm für das Kunststoffgranulat 13 dient. Der Gleitfilm 24 kann abschnittsweise entlang des Umfangs an der Innenwand 23 und/oder entlang der Längsachse 25 der Förderleitung 6 ausgeführt sein. Insbesondere ist der Gleitfilm 24 vollflächig entlang des Umfangs der Innenwand 23 ausgeführt.

Durch die Kondensations-Temperiereinheit 15 kann die Temperatur T_{IW} an der Innenwand 23 der Förderleitung 6 in einem vorteilhaften Temperaturbereich eingestellt werden, der zwischen weniger als 15° K der Temperatur der Förderströmung T_{F} und der Temperatur T_{F} der Förderströmung entspricht. Die Temperatur T_{F} der Förderströmung ist eine Mischtemperatur T_{G} des Fördergases 14 und der Temperatur T_{K} des Kunststoffgranulats 13.

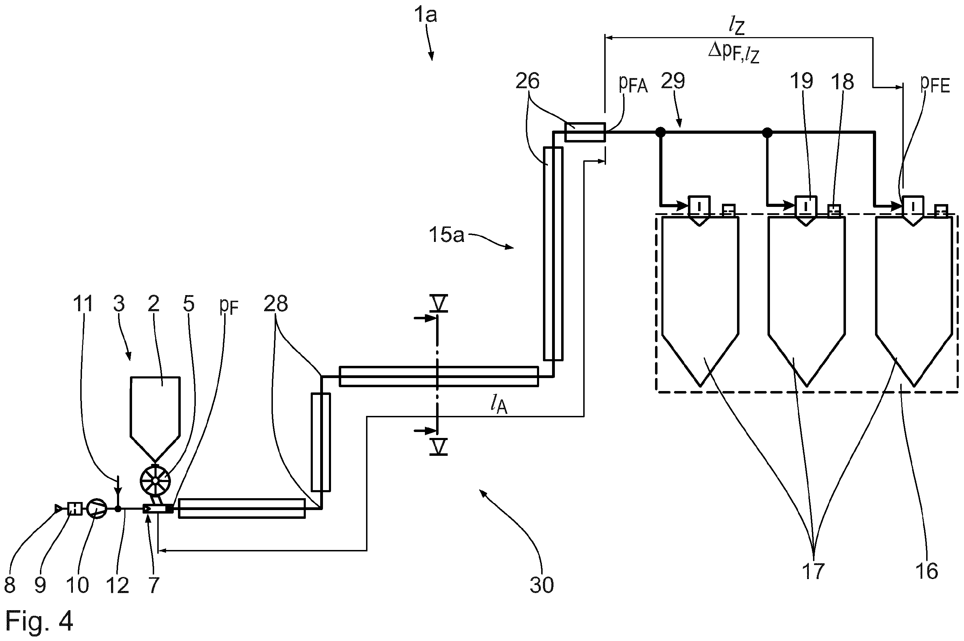

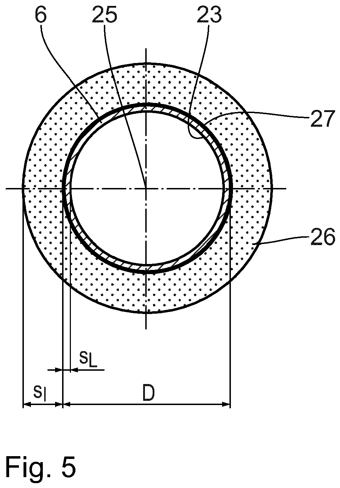

Im Folgenden wird unter Bezugnahme auf Fig. 4 und Fig. 5 eine weitere Ausführungsform beschrieben. Konstruktiv identische Teile erhalten dieselben Bezugszeichen wie bei der vorherigen Ausführungsform, auf deren Beschreibung hiermit verwiesen wird. Konstruktiv unterschiedliche, jedoch funktionell gleichartige Teile erhalten dieselben Bezugszeichen mit einem nachgestellten a.

Ein Unterschied besteht darin, dass die Kondensations-Temperiereinheit 15a mehrere passive Elemente aufweist, die gemäß dem gezeigten Ausführungsbeispiel jeweils als thermische Isolierungselemente 26 ausgeführt sind. Die thermischen Isolierungselemente 26 sind separat voneinander ausgeführt. Die thermischen Isolierungselemente 26 sind - abgesehen von ihrer Länge - identisch ausgeführt. Es ist denkbar, in Abhängigkeit der zu erreichenden Temperierung, unterschiedlich ausgestaltete thermische Isolierungselemente vorzusehen, die entlang der Förderleitung 6 unterschiedliche thermische Isolierungseffekte, also unterschiedliche Temperierungswirkungen, entfalten.

Das thermische Isolierungselement 26 ist gemäß dem gezeigten Ausführungsbeispiel als ringzylindrische Isolierungsschicht ausgeführt, die an einer der Innenwand 23 gegenüberliegend angeordneten Außenwand 27 vollumfänglich um die Förderleitung 6 herum angeordnet ist. Es ist auch denkbar, dass das thermische Isolierungselement 26 als Isolierungsschicht ausgeführt ist, die sich nur bereichsweise entlang des äußeren Umfangs der Förderleitung 6 erstreckt. Die Isolierungsschicht kann aus mehreren Schichtabschnitten bestehen, die entlang des äußeren Umfangs an der Außenwand 27 der Förderleitung 6 angeordnet sind.

Gemäß dem gezeigten Ausführungsbeispiel weist die Isolierungsschicht 26 eine Schichtdicke si auf, die insbesondere größer ist als die Wandstärke S_{L} der Förderleitung 6. Insbesondere gilt: si ≥ 5 · S_{L}, insbesondere si ≥ 10 · s_{I}, insbesondere si ≥ 15 · s_{L} und insbesondere s_{I} ≥ 20 · s_{L}.

Insbesondere ist die Schichtdicke si kleiner als ein Außendurchmesser D der Förderleitung 6. Insbesondere gilt: si ≤ 0,6 · D, insbesondere si ≤ 0,2 · D und insbesondere si ≤ 0,1 · D.

Gemäß dem gezeigten Ausführungsbeispiel sind einzelne Abschnitte der Förderleitung 6 ohne thermische Isolierungselemente 26 ausgeführt. Insbesondere sind Rohrbögen 28 ohne thermische Isolierungselemente 26 ausgeführt.

Die Förderleitung 6 weist einen Zielabschnitt 29 auf, der dem Zielort 16 zugewandt ist. Der Zielabschnitt 29 weist eine Zielabschnitts-Länge lz auf.

Die Zielabschnitts-Länge lz ist derart festgelegt, dass eine Förderdruckdifferenz Δp_{F}, l_{z} entlang des Zielabschnitts 29 einen definierten Maximalwert nicht überschreitet. Der definierte Maximalwert beträgt gemäß dem gezeigten Ausführungsbeispiel höchstens 30 % des Gesamtförderdruckes p_{F}. Der Gesamtförderdruck ist der Förderdruck, mit dem das Fördergas 14 von der Druckluftleitung 12 am Aufgabeort 7 der Förderleitung 6 zugeführt wird. Die Förderdruckdifferenz ergibt sich aus der Differenz des Förderdrucks am Anfang des Zielabschnitts p_{FA} und dem Förderdruck am Ende des Zielabschnitts 29 p_{FE}.

Dadurch, dass in dem Zielabschnitt 29 bewusst auf die Kondensations-Temperiereinheit 15a verzichtet wird, kann Flüssigkeit im Fördergas 14 verdunsten. Die Kondensatbildung ist dadurch reduziert und insbesondere verhindert. Das Risiko, dass Flüssigkeit an den Zielort 16, insbesondere in die Zielbehälter 17, gelangt, ist reduziert und insbesondere verhindert.

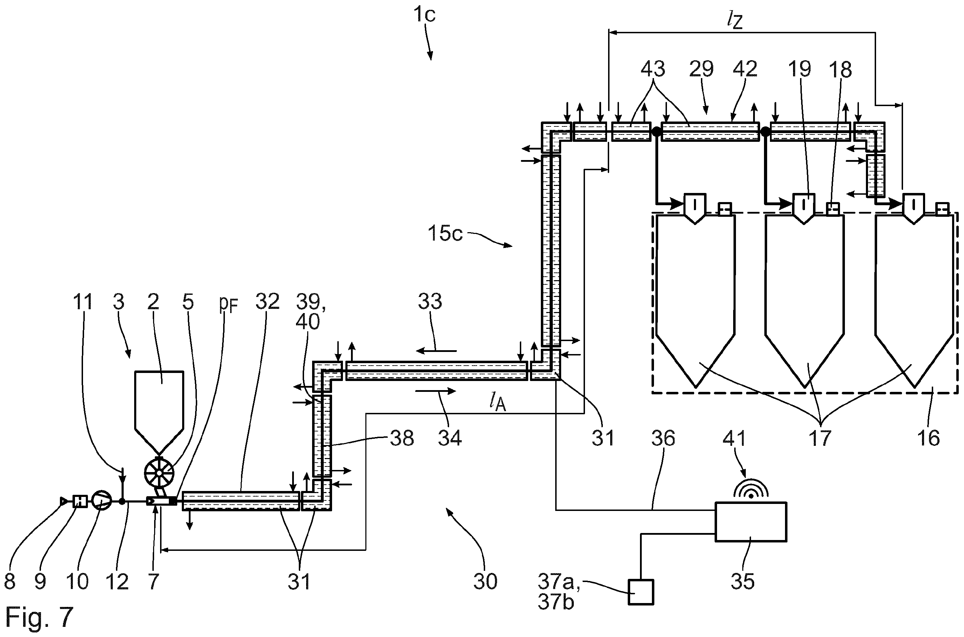

Zusätzlich oder alternativ kann in dem Zielabschnitt 29 eine Verdunstungs-Temperiereinheit 42 vorgesehen sein, die im Weiteren anhand der Ausführungsform gemäß Fig. 7 noch erläutert wird.

Die Kondensations-Temperiereinheit 15a ist bei der Förderanlage 1a entlang der Förderleitung 6 entlang eines Anfangsabschnitts 30 angeordnet. Der Anfangsabschnitt 30 beginnt am Aufgabeort 7 und erstreckt sich bis zum Zielabschnitt 29. Gemäß dem gezeigten Ausführungsbeispiel besteht die Förderleitung 6 ausschließlich aus dem Anfangsabschnitt 30 und dem Zielabschnitt 29. Die Förderleitung 6 weist eine Gesamtlänge l_{ges} auf, die der Summe der Anfangsabschnitts-Länge la und der Zielabschnitts-Länge lz entspricht.

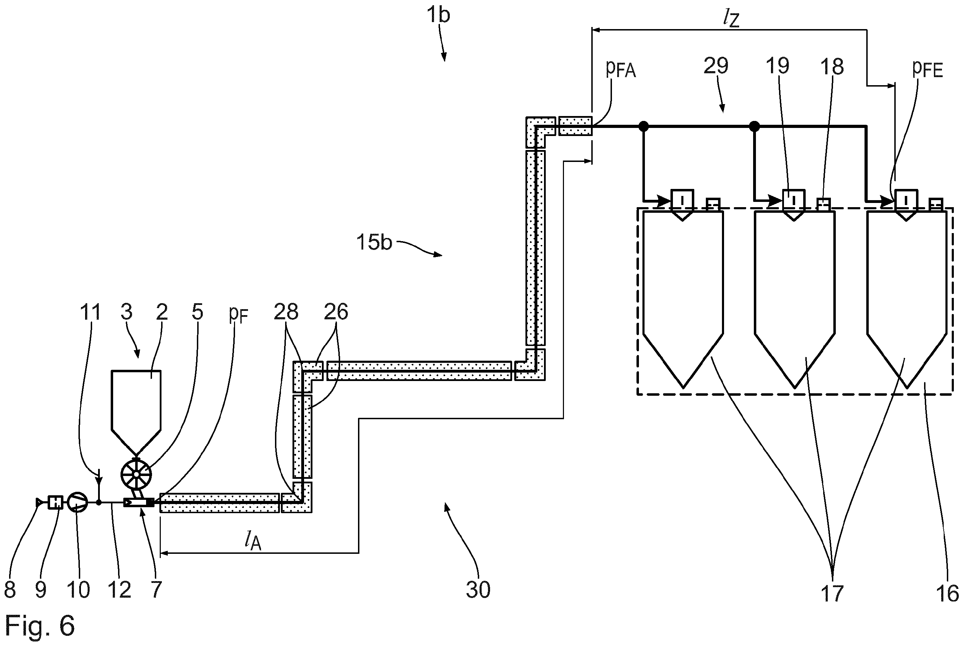

Im Folgenden wird unter Bezugnahme auf Fig. 6 eine weitere Ausführungsform beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten b.

Ein wesentlicher Unterschied gegenüber den vorherigen Ausführungsformen besteht darin, dass die Kondensations-Temperiereinheit 15b derart ausgeführt ist, dass die Förderleitung 6 innerhalb des Anfangsabschnitts 30 im Wesentlichen vollständig mittels Isolierungselementen 26 isoliert ist. Insbesondere sind Isolierungselemente 26 auch an Rohrbögen 28 angeordnet.

Zusätzlich oder alternativ kann in dem Zielabschnitt 29 eine Verdunstungs-Temperiereinheit 42 vorgesehen sein, die im Weiteren anhand der Ausführungsform gemäß Fig. 7 noch erläutert wird.

Im Folgenden wird unter Bezugnahme auf Fig. 7 eine weitere Ausführungsform beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten c.

Ein wesentlicher Unterschied gegenüber den vorherigen Ausführungsformen besteht darin, dass die Kondensations-Temperiereinheit 15c aktive Elemente in Form von aktiven Kühlelementen 31 aufweist. Das aktive Kühlelement 31 ist als Doppelrohrapparat ausgeführt, mit einem zusätzlichen Rohr 32, das konzentrisch zu der Förderleitung 6 angeordnet ist. In dem Zwischenraum zwischen dem zusätzlichen Rohr 32 und der Förderleitung 6 kann eine Kühlflüssigkeit, insbesondere Wasser, zur Kühlung der Außenwand 27 der Förderleitung 6 dienen. Die Kühlflüssigkeit wird in den Zwischenraum derart zu- und abgeführt, dass die Strömungsrichtung 33 der Kühlflüssigkeit der Förderrichtung 34 von Kunststoffgranulat 13 und Fördergas 14 entgegengesetzt orientiert ist. Das aktive Kühlelement 31 ist im Gegenstromverfahren betrieben.

Durch die aktiven Kühlelemente 31 kann die Wärmeabfuhr an der Außenwand 27 der Förderleitung 6 gezielt beeinflusst werden. Insbesondere ist eine angepasste Wärmeabfuhr in Abhängigkeit der Förderbedingungen und/oder der äußeren Umgebungsbedingungen möglich. Insbesondere kann die Wärmeabfuhr, die mittels eines aktiven Kühlelements 31 ermöglicht wird, über die Temperatur der Kühlflüssigkeit und/oder die Fließgeschwindigkeit der Kühlflüssigkeit beeinflusst werden.

Die Förderanlage 1c weist ferner eine schematisch dargestellte Regelungseinheit 35 auf. Die Regelungseinheit 35 ermöglicht die Regelung der Temperatur Tiw an der Innenwand 23 der Förderleitung 6. Die Regelungseinheit steht insbesondere mit der Kondensations-Temperiereinheit 15c, insbesondere mit den aktiven Kühlelementen 31, in Signalverbindung. Aus Darstellungsgründen ist diese Signalverbindung 36 schematisch in Fig. 7 nur zu einem der aktiven Kühlelemente 31 dargestellt.

Ferner ist die Regelungseinheit 35 mit einem Umgebungstemperatur-Sensor 37a und mit einem Umgebungsfeuchte-Sensor 37b in Signalverbindung.

Die Regelungseinheit 35 ist ferner mit einem Rohrwandtemperatur-Sensor 38 und eine Fördergastemperatur-Sensor 39 in Signalverbindung. Der Rohrwandtemperatur-Sensor 38 dient zur Messung der Temperatur T_{IW} an der Innenwand 23 der Förderleitung 6. Der Rohrwandtemperatur-Sensor 38 kann an der Außenwand 27 oder an der Innenwand 23 der Förderleitung 6 angeordnet sein.

Die Regelungseinheit 35 steht ferner mit mindestens einem Sensor 40 zur Messung der relativen Feuchte des Fördergases 14 in Signalverbindung. Entlang der Förderleitung 6 können mehrere Feuchtesensoren 40 vorgesehen sein. Der Fördergastemperatur-Sensor 39 und der mindestens eine Feuchtesensor 40 sind innerhalb der Förderleitung 6 und/oder in der Druckluftleitung 12 zwischen dem Druckerzeuger 10 und dem Aufgabeort 7 angeordnet.

Die Signalverbindung von der Regelungseinheit 35 zu den Sensoren 38, 39, 49 ist kabelgebunden ausgeführt, kann aber auch kabellos ausgeführt sein. Die kabelgebundenen Signalverbindungen sind aus Darstellungsgründen in Fig. 7 nicht gezeigt. Kabellose Signalverbindungen sind in Fig. 7 durch das schematische Funksymbol 41 charakterisiert.

In Abhängigkeit der gemessenen Werte für die Umgebungstemperatur, die Temperatur Tiw an der Innenwand 23, der Temperatur T_{F} der Förderströmung und der relativen Feuchte des Fördergases, wird in der Regelungseinheit 35 ein Sollwert für die Temperatur Tiw an der Innenwand 23 ermittelt und durch ein Stellsignal an die aktiven Kühlelemente 31 entsprechend beeinflusst. Durch die Regelungseinheit 35 und die Signalverbindungen 36, 41 ist insbesondere ein geschlossener Regelkreis möglich, um eine konstante Gleitfilmbildung an der Innenwand 23 zu gewährleisten.

Es ist möglich, die Förderanlage abschnittsweise mit separaten Sensoren zu versehen, die jeweils unabhängig voneinander mit der Regelungseinheit 35 in Signalverbindung stehen. Dadurch können die verschiedenen Abschnitte der Förderanlage 1 unabhängig voneinander geregelt werden. Dadurch ist es möglich, die Förderbedingungen in den verschiedenen Abschnitten gezielt und insbesondere unabhängig von den übrigen Abschnitten der Förderanlage 1 einzustellen.

Es ist denkbar, die Temperatur Tiw an der Innenwand 23 so weit unterhalb der Temperatur T_{F} der Förderströmung zu halten, dass bereits eine geringe Flüssigkeitszugabe eine lokale, druckinduzierte Sättigung bewirkt, um eine lokale Gleitfilmbildung zu induzieren. Insbesondere ist die Temperatur Tiw an der Innenwand 23 kleiner als 15° K als die Temperatur T_{F} der Förderströmung, insbesondere kleiner als 10° K, insbesondere kleiner als 5° K und insbesondere kleiner als 1° K. Die insgesamt zuzugegebende Flüssigkeitsmenge kann dadurch reduziert werden und/oder der reibungsmindernde Effekt des Gleitfilms verstärkt werden.

Es ist insbesondere denkbar, den Temperaturunterschied derart groß einzustellen, dass auf eine separate Flüssigkeitszugabe, insbesondere in Form von Wasser, verzichtet werden kann, wobei ein stationärer Gleitfilm an der Innenwand 23 der Förderleitung 6 ausgebildet wird. Dieses Verfahren ist besonders vorteilhaft, da Instrumente zur dosierten Flüssigkeitszugabe entbehrlich sind. Der apparative Aufwand ist reduziert. Das aus dem Gleitfilm verschleppte Wasser kann von dem Fördergas wieder aufgenommen werden, sobald sich dieses wieder auf die Temperatur T_{F} des Förderguts erwärmt. Dies erfolgt insbesondere im Inneren der Förderströmung vergleichsweise schnell. Ein Austausch der Förderluft vor dem Zielort 16 ist dadurch entbehrlich. Eine Austauschgaseinheit, wie sie aus der EP 3 366 618 A1 bekannt ist, ist dadurch entbehrlich. Dieses Verfahren eignet sich insbesondere für kurze Förderleitungen 6, mit welchen einerseits nur geringe förderdruckinduzierte Übersättigungen erreichbar sind und andererseits der Anfangsabschnitt, innerhalb dessen insbesondere eine Kühlung der Förderleitung 6 erfolgt, vergleichsweise kurz ausgeführt ist.

Ein weiterer Unterschied gegenüber den vorherigen Ausführungsformen besteht darin, dass in dem Zielabschnitt 29 nicht nur auf die Kondensations-Temperiereinheit verzichtet worden ist, sondern zusätzlich eine Verdunstungs-Temperiereinheit 42 vorgesehen ist. Gemäß dem gezeigten Ausführungsbeispiel erstreckt sich die Verdunstungs-Temperiereinheit 42 entlang der gesamten Länge Lz des Zielabschnitts 29. Die Verdunstungs-Temperiereinheit 42 weist mehrere aktive Elemente in Form von aktiven Heizelementen 43 auf. Die aktiven Heizelemente 43 sind im Wesentlichen identisch zu den aktiven Kühlelementen 31 ausgeführt, wobei anstelle eines Kühlmittels ein Wärmeträgerfluid in Form von Warmwasser verwendet wird, das im Gleichstrom, und nicht im Gegenstrom, zu der Förderrichtung 34 des Kunststoffgranulats 13 geführt wird.

In Abhängigkeit der Umgebungsbedingungen ist es auch denkbar, anstelle der aktiven Kühlelemente für die Kondensations-Temperiereinheit 15c aktive Heizelemente zu verwenden.

Dadurch, dass im Zielabschnitt 29 die Verdunstungs-Temperiereinheit 42 eingesetzt wird, kann die Kondensatbildung im Zielabschnitt 29 noch zuverlässiger ausgeschlossen werden.

Es ist insbesondere denkbar, dass die Regelungseinheit 35 mit entsprechenden Sensoren 38, 39 und 40, die dann in der Förderleitung 6 im Bereich des Zielabschnitts 29 angeordnet sind, in Signalverbindung steht, um eine Regelung der Temperatur Tiw an der Innenwand 23 der Förderleitung 6 im Zielabschnitt 29 zu gewährleisten.

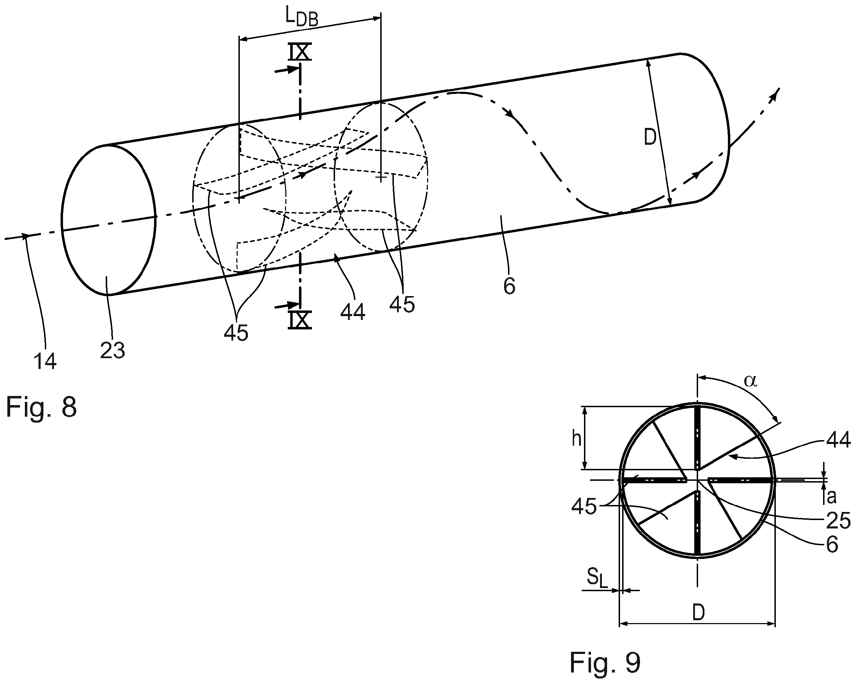

Nachfolgend wird anhand von Fig. 8 und 9 eine Verteilungseinheit, die zum gezielten Verteilen des an der Innenwand 23 der Förderleitung 6 gebildeten Gleitfilms 24 dient, näher erläutert.

Die Strömungsrichtung des Fördergases ist in Fig. 8 durch den Strömungspfeil 14 charakterisiert. Die Verteilungseinheit 44 gemäß Fig. 8 weist mehrere, gemäß dem gezeigten Ausführungsbeispiel vier Drallbleche 45 auf. Die vier Drallbleche 45 sind entlang des Umfangs der Innenwand 23 gleich beabstandet zueinander angeordnet. Die Drallbleche 45 sind jeweils als Blechstreifen ausgeführt, die entlang der Längsachse 25 der Förderleitung 6 eine Krümmung derart aufweisen, dass die Förderströmung 14 abgelenkt wird. Insbesondere wird durch die Verteilungseinheit 44 mit den Drallblechen 45 eine helixförmige Strömungsrichtung erzeugt, die sich entlang der Innenwand 23 der Förderleitung 6 erstreckt. Diese helixförmige Förderströmung ist in Fig. 8 stromabseitig der Verteilungseinheit 44 dargestellt. Durch die helixförmige Förderströmung wird der Kontakt des erwärmten Fördergases mit der kalten Innenwand 23 der Förderleitung 6 intensiviert, sodass die Kondensatbildung ansteigt. Die Verteilungseinheit 44 bewirkt eine zusätzliche Bildung des Gleitfilms.

Die Drallbleche 45 sind identisch ausgeführt und entlang des Umfangs der Förderleitung 6 gleich beabstandet, also mit einem Winkelabstand von 90°, zueinander angeordnet. Die Verteilungseinheit 44 kann auch mehr als vier Drallbleche 45 aufweisen. Die Verteilungseinheit 44 kann auch weniger als vier Drallbleche 45 aufweisen, insbesondere genau drei Drallbleche 45, insbesondere genau zwei Drallbleche 45 und insbesondere genau ein Drallblech 45. Es ist denkbar, dass die Drallbleche 45 einer Verteilungseinheit unterschiedlich zueinander ausgeführt sind.

Die Drallbleche 45 weisen jeweils eine Blechdicke a im Bereich von 2 mm bis 10 mm auf. Die Blechdicke a beträgt insbesondere das 0,5-fache bis 10-fache der Wandstärke s_{L} der Förderleitung 6, insbesondere das 1-fache bis 3-fache der Wandstärke s_{L}.

Die Drallbleche 45 weisen jeweils eine Blechhöhe h zwischen 20 mm und 200 mm auf. Vorteilhafterweise beträgt die Blechhöhe h das 0,1-fache bis 0,9-fache des Außendurchmessers D der Förderleitung 6, insbesondere das 0,2-fache bis 0,5-fache des Außendurchmessers D.

Die Drallbleche 45 weisen entlang der Förderleitung 6 eine Länge L_{DB} von 100 mm bis 1000 mm auf. Die Länge L_{DB} beträgt insbesondere das 1-fache bis 10-fache des Außendurchmesser D der Förderleitung 6, insbesondere das 2-fache bis 5-fache des Außendurchmessers D.

Die Drallbleche 45 weisen jeweils einen Verdrehwinkel α für die Erzeugung der helixförmigen Förderströmung auf. Der Verdrehwinkel α beträgt zwischen 10° und 180°, insbesondere zwischen 30° bis 90°.

Zusätzlich bewirkt die helixförmige Strömung des Fördergases eine Verteilung des Gleitfilms an der Innenwand 23.

Die Verteilungseinheit 44 mit den Drallblechen 45 ist insbesondere in einem geradlinigen Abschnitt der Förderleitung, insbesondere in einem Horizontalabschnitt der Förderleitung 6, angeordnet. In der Verteilungseinheit 44 können weniger als vier oder mehr als vier Drallbleche 45 vorgesehen sein.

Besonders vorteilhaft ist es, wenn die Verteilungseinheit 44 mit den Drallblechen 45 entlang der Förderleitung 4 im Bereich des zweiten Viertels bis zum Ende des letzten Viertels eines Horizontalabschnitts der Förderleitung 6 angeordnet ist. Idealerweise ist die Verteilungseinheit 44 mit den Drallblechen 45 im Bereich des zweiten und dritten Viertels eines Horizontalabschnitts der Förderleitung 6 angeordnet. Vorteilhafterweise sind die Drallbleche mit einem Axialabstand zu Rohrleitungsbögen 28 angeordnet, wobei der Axialabstand dem 20-fachen bis 200-fachen, insbesondere dem 50-fachen bis 150-fachen des Außendurchmessers D der Förderleitung 6 entspricht.

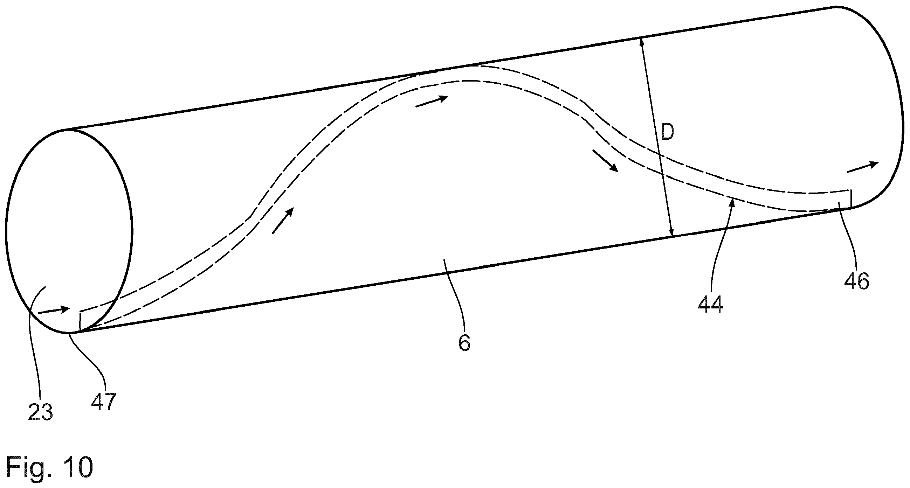

Im Folgenden wird unter Bezugnahme auf Fig. 10 eine weitere Ausführungsform einer Verteilungseinheit beschrieben.

Gemäß dem gezeigten Ausführungsbeispiel weist die Verteilungseinheit 44 eine Leitnut 46 in Form einer Prägung auf, die in Helixform an der Innenwand 23 der Förderleitung 6 integriert ist. Die Leitnut 46 ist insbesondere als Rinne in die Oberfläche der Innenwand 23 eingearbeitet, insbesondere eingeprägt. Die Leitnut 46 kann eine rechteckförmige oder halbkreisförmige Kontur aufweisen.

Die Leitnut 46 bewirkt ein Umleiten der kondensierten Flüssigkeit an der Innenwand 23, insbesondere von einem Bodenbereich 47 der Förderleitung 6 in den Fördergasstrom und/oder über den Umfang der Innenwand 23. Es kann auch mehr als eine Leitnut 46 vorgesehen sein. Zusätzlich oder alternativ kann die Verteilungseinheit 44 auch Leitbleche aufweisen, die eine Umleitung des Flüssigkeitsstroms analog den Leitnuten 46 bewirken. Die Leitnuten 46 und/oder die Leitblechen bilden Leitelemente, die eine gezielte Verteilung des erzeugten Flüssigkeitsfilms zur Bildung und Aufrechterhaltung des Gleitfilms ermöglichen.

Die Leitelemente werden bevorzugt in geraden Abschnitten der Förderleitung 6, insbesondere in Horizontalabschnitten der Förderleitung 6 verwendet. Entlang der Förderleitung können mehrere Leitelemente hintereinander und/oder nebeneinander angeordnet sein.

Es ist vorteilhaft, wenn die Leitelemente im Bereich des zweiten Viertels bis zum Ende des letzten Viertels eines Horizontalabschnitts der Förderleitung 6 und insbesondere im Bereich des zweiten und dritten Viertels des Horizontalabschnitts der Förderleitung 6 angeordnet sind. Insbesondere sind die Leitelemente mit einem Axialabstand zu Rohrleitungsbögen 28 angeordnet, wobei der Axialabstand dem 20-fachen bis 200-fachen des Außendurchmessers D der Förderleitung 6 und insbesondere dem 50-fachen bis 150-fachen des Außendurchmessers D entspricht.

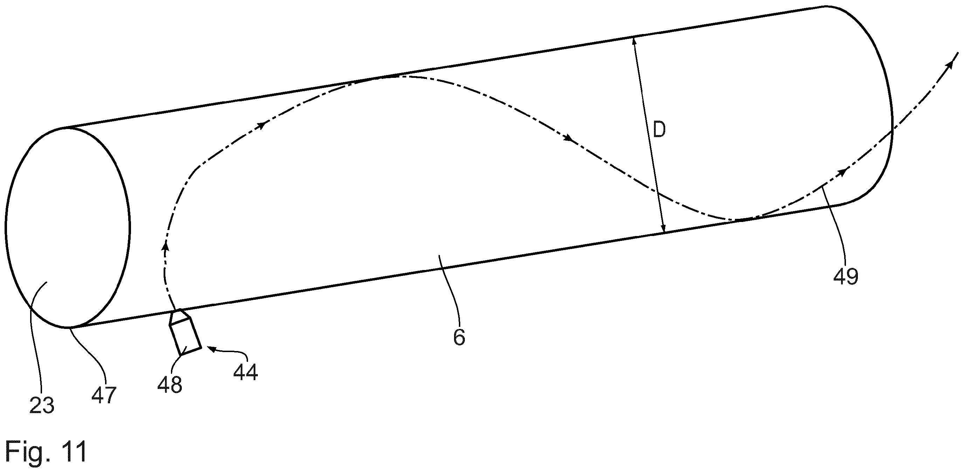

Im Folgenden wird unter Bezugnahme auf die Fig. 11 eine weitere Ausführungsform einer Verteilungseinheit 44 erläutert

Bei dem gezeigten Ausführungsbeispiel weist die Verteilungseinheit 44 mindestens ein Gaseinblaselement in Form einer Luftdüse 48 auf. Die Luftdüse 48 ist unmittelbar an die Förderleitung 6 gekoppelt. Insbesondere ist die Luftdüse 48 im Bodenbereich 47 der horizontal angeordneten Förderleitung 6 angeschlossen. Insbesondere ist die Luftdüse 48 im Wesentlichen tangential an der Förderleitung 6 angeordnet, sodass die von Luftdüse 48 in die Förderleitung 6 eingeblasene Luft im Wesentlichen einer tangentialen Strömungsrichtung entlang der Innenwand 23 der Förderleitung 6 folgt. In Überlagerung mit der Strömungsrichtung des Fördergases 14 resultiert für die mittels der Luftdüse 48 eingeblasene Luft eine im Wesentlichen helixförmige Strömungsrichtung, die in Fig. 11 durch den Strömungspfeil 49 charakterisiert ist.

Die eingeblasene, helixförmige Luftströmung entlang der Innenwand 23 der Förderleitung 6 bewirkte eine vorteilhafte Verteilung der kondensierten Flüssigkeit und damit eine verbesserte Anordnung des Gleitfilms. Ein Einbau von statischen Elementen innerhalb der Förderleitung 6, die die Kunststoffförderung beeinträchtigen und/oder behindern könnten, wird dadurch vermieden.

Die Luftdüse 48 ist insbesondere an geradlinigen Abschnitten der Förderleitung 6, insbesondere an Horizontalabschnitten der Förderleitung 6, angeschlossen. Es ist denkbar, mehrere Luftdüsen 48 zu verwenden, die entlang der Längsachse 25 beabstandet angeordnet sein können. Es ist auch denkbar, entlang des Umfangs der Förderleitung 6 mehrere Luftdüsen 48 in einer Ebene senkrecht zur Längsachse 25 anzuordnen.

Es ist vorteilhaft, wenn die Luftdüsen im Bereich des zweiten Viertels bis zum Ende des letzten Viertels eines Horizontalabschnitts der Förderleitung 6 und insbesondere im Bereich des zweiten und dritten Viertels des Horizontalabschnitts der Förderleitung 6 angeordnet sind. Insbesondere sind die Luftdüsen mit einem Axialabstand zu Rohrleitungsbögen 28 angeordnet, wobei der Axialabstand dem 20-fachen bis 200-fachen des Außendurchmessers D der Förderleitung 6 und insbesondere dem 50-fachen bis 150-fachen des Außendurchmessers D entspricht.

Bei den vorstehend erläuterten Ausführungsformen der Verteilungseinheit 44 gemäß Fig. 8 bis 11 ist es zusätzlich oder alternativ denkbar, dass die Innenwand 23 eine hydrophile Benetzungsoberfläche aufweist. Dadurch wird eine verbesserte Benetzung der Innenwand 23 mit der Flüssigkeit erreicht. Ein Kontaktwinkel, der auch als Benetzungswinkel bezeichnet wird, den ein Flüssigkeitstropfen an der hydrophilen Benetzungsoberfläche bildet, beträgt vorteilhafterweise weniger als 90°, insbesondere weniger als 50° und insbesondere weniger als 10°.

Für sämtliche Ausführungsformen gilt, dass einzelne Merkmale beliebig kombinierbar sind. Insbesondere können auch die Förderanlagen 1, 1a und 1b mit einer Verdunstungs-Temperiereinheit 42 ausgeführt sein. Sämtliche Verteilungseinheiten 44 können unabhängig voneinander in Kombination oder einzeln in allen genannten Förderanlagen verwendet werden.

## Patentansprüche

1. Förderanlage zur pneumatischen Förderung von Kunststoffgranulat mittels feuchtem Fördergas aufweisend
- einen Aufgabeort (7), an dem das Kunststoffgranulat (13) mit Druck beaufschlagtem Fördergas (14) in eine Förderleitung (6) aufgegeben wird, wobei das Fördergas eine relative Feuchte von mindestens 60 % und höchstens 200 % aufweist,
- einen mit dem Aufgabeort (7) in Förderverbindung stehenden Zielort (16),
**gekennzeichnet durch**
- eine abschnittsweise entlang der Förderleitung (6) angeordnete Kondensations-Temperiereinheit (15; 15a; 15b; 15c) zum Temperieren der Förderleitung (6) derart, dass im Fördergas (14) enthaltene Feuchtigkeit für eine Gleitfilmbildung an einer Innenwand (23) der Förderleitung (6) gezielt kondensiert wird, wobei sich die Kondensations-Temperiereinheit (15; 15a; 15b; 15c) ausgehend von dem Aufgabeort (7) entlang der Förderleitung (6) über mindestens 20 % der Gesamtlänge der Förderleitung (6) erstreckt.

2. Förderanlage gemäß Anspruch 1, **dadurch gekennzeichnet, dass** die Förderleitung (6) entlang eines dem Zielort (16) zugewandten Zielabschnitts (29) ohne die Kondensations-Temperiereinheit (15; 15a; 15b; 15c) ausgeführt ist und/oder eine Verdunstungs-Temperiereinheit (42) zum Temperieren der Förderleitung im Zielabschnitt (29) zur Kondensatvermeidung an der Innenwand (23) der Förderleitung (6) aufweist, wobei der Zielabschnitt (29) insbesondere eine Zielabschnitts-Länge (lz) derart aufweist, dass eine Förderdruckdifferenz (Δp_{F,lZ}) entlang des Zielabschnitts (29) höchstens 30 % eines Gesamtförderdruckes (p_{F}) beträgt.

3. Förderanlage gemäß einem der vorstehenden Ansprüchen, **dadurch gekennzeichnet, dass** die Kondensations-Temperiereinheit (15; 15a; 15b) mindestens ein passives Element aufweist, das insbesondere als Beschattungselement (20), als passives Kühlelement und/oder als thermisches Isolierungselement (26) ausgeführt ist.

4. Förderanlage gemäß einem der vorstehenden Ansprüchen, **dadurch gekennzeichnet, dass** die Kondensations-Temperiereinheit (15c) mindestens ein aktives Element aufweist, das insbesondere als aktives Heizelement und/oder als aktives Kühlelement (31) ausgeführt ist.

5. Förderanlage gemäß einem der vorstehenden Ansprüchen, **gekennzeichnet durch** eine Regelungseinheit (35) zur Regelung der Temperatur (Tiw) an der Innenwand (23) der Förderleitung (6) für die Gleitfilmbildung, wobei die Regelungseinheit (35) insbesondere mit der Kondensations-Temperiereinheit (15; 15a; 15b; 15c) sowie mit mindestens einem Temperatursensor (37, 38, 39) und/oder mit einem Sensor (40) zur Feuchtemessung in der Förderleitung (6) und/oder in einer Druckgasleitung (12) in Signalverbindung (36, 41) steht.

6. Förderanlage gemäß einem der vorstehenden Ansprüchen, **gekennzeichnet durch** eine Verteilungseinheit (44) zum gezielten Verteilen des an der Innenwand (23) der Förderleitung (6) gebildeten Gleitfilms (24), wobei die Verteilungseinheit (44) insbesondere im Bereich der Kondensations-Temperiereinheit (15; 15a; 15b; 15c) angeordnet ist.

7. Förderanlage gemäß Anspruch 6, **dadurch gekennzeichnet, dass** die Verteilungseinheit (44) mindestens ein Drallblech (45) zur Drallerzeugung im Förderstrom aufweist, wobei das mindestens eine Drallblech (45) innerhalb der Förderleitung (6), insbesondere entlang eines geradlinigen, insbesondere horizontal orientierten, Abschnitts der Förderleitung (6) angeordnet ist.

8. Förderanlage gemäß Anspruch 6 oder 7, **dadurch gekennzeichnet, dass** die Verteilungseinheit (44) mindestens ein Umleitelement zum Umleiten eines Flüssigkeitsstroms in der Förderleitung (6) aufweist, wobei das mindestens eine Umleitelement insbesondere als Leitblech, das insbesondere an der Innenwand (23) der Förderleitung (6) befestigt ist, und/oder als Leitnut (46), die insbesondere an der Innenwand (23) der Förderleitung (6) integriert ausgeführt ist, wobei die Leitnut (46) insbesondere als Prägung an der Innenwand (23) ausgeführt ist.

9. Förderanlage gemäß einem der Ansprüche 6 bis 8, **dadurch gekennzeichnet, dass** die Verteilungseinheit (44) mindestens ein Gaseinblaselement (48) aufweist, das an die Förderleitung (6) zum zusätzlichen Einblasen eines Gases für die Verteilung des Gleitfilms (24) angeschlossen ist.

10. Förderanlage gemäß einem der vorstehenden Ansprüche, **dadurch gekennzeichnet, dass,** insbesondere im Bereich der Verteilungseinheit (44), die Innenwand (23) der Förderleitung (6) mit einer hydrophilen Benetzungsoberfläche ausgeführt ist, die insbesondere einen Kontaktwinkel aufweist, der kleiner ist als 90°, insbesondere kleiner als 50°, insbesondere kleiner als 30°, insbesondere kleiner als 10°.

11. Förderanlage gemäß einem der vorstehenden Ansprüche, **gekennzeichnet durch** eine Befeuchtungseinheit (11) zum Befeuchten des Fördergases (14) und/oder des Kunststoffgranulats (13) durch Hinzugeben von Flüssigkeit, insbesondere mittels eines separaten Flüssigkeitsanschlusses.

12. Verfahren zur pneumatischen Förderung von Kunststoffgranulat, das Polyolefingranulat ist, das mittels eines feuchten Fördergases entlang einer Förderleitung (6) einer Förderanlage (1) gemäß einem der vorstehenden Ansprüche von einem Aufgabeort (7) zu einem Zielort (16) gefördert wird, wobei das feuchte Fördergas eine relative Feuchte von mindestens 60 % und höchstens 200 % aufweist, wobei das feuchte Fördergas (14) während der Förderung zumindest bereichsweise entlang der Förderleitung (6) übersättigt ist, wobei die Förderleitung (6) abschnittsweise mittels einer Kondensations-Temperiereinheit (15; 15a; 15b; 15c) temperiert wird und durch Auskondensieren von in dem Fördergas (14) enthaltener Feuchtigkeit ein Gleitfilm (24) an einer Innenwand (23) der Förderleitung (6) gebildet wird.

13. Verfahren gemäß Anspruch 12, **dadurch gekennzeichnet, dass** eine Temperatur T_{IW} an der Innenwand (23) der Förderleitung (6) in Abhängigkeit einer Temperatur T_{F} der Förderströmung eingestellt wird, wobei insbesondere gilt: Tiw - T_{F} = -100 K...+30 K, insbesondere Tiw - T_{F} = -30 K...0 K und insbesondere Tiw - T_{F} = 15 K...0 K, wobei insbesondere die Temperatur T_{IW} an der Innenwand (23) der Förderleitung (6) mittels einer Regelungseinheit (35) geregelt wird, wobei die Regelungseinheit (35) insbesondere mit der Kondensations-Temperiereinheit (15; 15a; 15b; 15c) sowie mit mindestens einem Temperatursensor (37, 38, 39) und/oder mit einem Sensor (40) zur Feuchtemessung in der Förderleitung (40) in Signalverbindung (36, 41) steht.

14. Verfahren gemäß einem der Ansprüche 12 bis 13, **dadurch gekennzeichnet, dass** die Temperatur T_{IW} an der Innenwand (23) der Förderleitung (6) entlang eines dem Zielort (16) zugewandten Zielabschnitts (29) der Förderleitung (6) ohne die Kondensations-Temperiereinheit (15; 15a; 15b; 15c) und/oder mittels einer Verdunstungs-Temperiereinheit (42) zur Kondensatvermeidung an der Innenwand (23) der Förderleitung (6) eingestellt wird, wobei der Zielabschnitt (29) insbesondere eine Zielabschnitts-Länge (lz) derart aufweist, dass eine Förderdruckdifferenz (Δp_{F,lZ}) entlang des Zielabschnitts (29) höchstens 30 % eines Gesamtförderdruckes (p_{F}) beträgt.

15. Verfahren gemäß einem der Ansprüche 12 bis 14, **dadurch gekennzeichnet, dass** dem Kunststoffgranulat (13) und/oder dem Fördergas (14) mittels einer Befeuchtungseinheit (11), insbesondere mittels eines separaten Flüssigkeitsanschlusses, Flüssigkeit in einer solchen Menge zugegeben wird, dass das Fördergas (14) während der Förderung zumindest bereichsweise entlang der Förderleitung (6) mit der Flüssigkeit übersättigt ist.

## Claims

1. Conveying system for pneumatically conveying of plastic granulate by means of humid conveying gas, having
- a feed location (7) at which the plastic granulate (13) is fed into a conveying line (6) by pressurized conveying gas (14), wherein the conveying gas has a relative humidity of at least 60 % and at most 200%,
- a destination (16) connected to the feed location (7),
**characterized by**
- a condensation tempering unit (15; 15a; 15b; 15c) which is arranged in sections along the conveying line (6), for making the conveying line (6) such temperature for the selective condensation of moisture contained in the conveying gas (14) to form a sliding film on an internal wall (23) of the conveying line (6), wherein the condensation tempering unit (15; 15a; 15b; 15c) extends from the feed location (7) along the conveying line (6) over at least 20 % of the total length of the conveying line (6).

2. Conveying system according to claim 1, **characterized in that** the conveying line (6) is embodied without the condensation tempering unit (15; 15a; 15b; 15c) along a target section (29) facing the target location (16) and/or has an evaporation tempering unit (42) for making the conveying line in the target section (29) such temperature to avoid condensate on the internal wall (23) of the conveying line (6), wherein the target section (29) has, in particular, a target section length (lz) such that a conveying pressure difference (Δp_{F,lZ}) along the target section (29) is at most 30 % of a total conveying pressure (p_{F}).

3. Conveying system according to any one of the preceding claims, **characterized in that** the condensation tempering unit (15; 15a; 15b) has at least one passive element, which is designed in particular as a shading element (20), as a passive cooling element and/or as a thermal insulation element (26).

4. Conveying system according to any one of the preceding claims, **characterized in that** the condensation tempering unit (15c) has at least one active element, which is designed in particular as an active heating element and/or as an active cooling element (31).

5. Conveying system according to any one of the preceding claims, **characterized by** a control unit (35) for controlling the temperature (Tiw) at the internal wall (23) of the conveying line (6) for the formation of the sliding film, wherein the control unit (35) is in signal communication (36, 41) in particular with the condensation tempering unit (15; 15a; 15b; 15c) and with at least one temperature sensor (37, 38, 39) and/or with a sensor (40) for humidity measurement in the conveying line (6) and/or in a pressurized gas line (12).

6. Conveying system according to any one of the preceding claims, **characterized by** a distribution unit (44) for the selective distribution of the sliding film (24) formed on the internal wall (23) of the conveying line (6), wherein the distribution unit (44) is arranged in particular in the region of the condensation tempering unit (15; 15a; 15b; 15c).

7. Conveying system according to claim 6, **characterized in that** the distribution unit (44) has at least one swirl vane (45) for generating swirl in the conveying flow, wherein the at least one swirl vane (45) is arranged within the conveying line (6), in particular along a rectilinear, in particular horizontally orientated, section of the conveying line (6).

8. Conveying system according to claim 6 or 7, **characterized in that** the distribution unit (44) has at least one deflection element for deflecting a fluid flow in the conveying line (6), wherein the at least one deflection element is embodied in particular as a baffle which is secured in particular on the internal wall (23) of the conveying line (6), and/or as a guide groove (46), which is embodied in a manner integrated in particular on the internal wall (23) of the conveying line (6), wherein the guide groove (46) is embodied in particular as an impressed feature on the internal wall (23).

9. Conveying system according to any one of claims 6 to 8, **characterized in that** the distribution unit (44) has at least one gas injection element (48) which is connected to the conveying line (6) for the additional injection of a gas for the distribution of the sliding film (24).

10. Conveying system according to any one of the preceding claims, **characterized in that,** in particular in the region of the distribution unit (44), the internal wall (23) of the conveying line (6) is embodied with a hydrophilic wetting surface which in particular has a contact angle which is less than 90°, in particular less than 50°, in particular less than 30°, in particular less than 10°.

11. Conveying system according to any one of the preceding claims, **characterized by** a humidification unit (11) for humidifying the conveying gas (14) and/or the plastic granulate (13) by adding liquid, in particular by means of a separate liquid connection.

12. Method for pneumatically conveying plastic granulate, which is polyolefin granulate, which is conveyed by means of a humid conveying gas along a conveying line (6) of a conveying system (1) according to one of the preceding claims from a feed location (7) to a target location (16), wherein the humid conveying gas has a relative humidity of at least 60% and at most 200%, wherein the humid conveying gas (14) is supersaturated at least in some regions along the conveying line (6) during conveyance, wherein making the conveying line (6) in some sections by means of a condensation tempering unit (15; 15a; 15b; 15c) such temperature to form a sliding film (24) on an internal wall (23) of the conveying line (6) by condensing moisture out of the conveying gas (14).

13. Method according to claim 12, **characterized in that** a temperature Tiw at the internal wall (23) of the conveying line (6) is set in accordance with a temperature T_{F} of the conveying flow, wherein in particular the following applies: Tiw - T_{F} = -100 K...+30 K, in particular Tiw - T_{F} = -30 K...0 K and in particular Tiw - T_{F} = 15 K...0 K, wherein in particular the temperature Tiw at the internal wall (23) of the conveying line (6) is controlled by means of a control unit (35), wherein the control unit (35) is in particular in signal communication (36, 41) with the condensation tempering unit (15; 15a; 15b; 15c) and with at least one temperature sensor (37, 38, 39) and/or with a sensor (40) for the humidity measurement in the conveying line (40).

14. Method according to any one of claims 12 to 13, **characterized in that** the temperature Tiw at the internal wall (23) of the conveying line (6) is set along a target section (29), facing the target location (16), of the conveying line (6) without the condensation tempering unit (15; 15a; 15b; 15c) and/or by means of an evaporation tempering unit (42) to avoid condensate on the internal wall (23) of the conveying line (6), wherein the target section (29) has, in particular, a target section length (lz) such that a conveying pressure difference (Δp_{F,lZ}) along the target section (29) is at most 30 % of a total conveying pressure (p_{F}).

15. Method according to any one of claims 12 to 14, **characterized in that** liquid is added in such a quantity to the plastic granulate (13) and/or the conveying gas (14) by means of a humidification unit (11), in particular by means of a separate liquid connection, that the conveying gas (14) is supersaturated with the liquid during conveyance, at least in some regions along the conveying line (6).

## Revendications

1. Installation de transport pour le transport pneumatique de granulat plastique au moyen d'un gaz de transport humide, présentant
- un lieu de chargement (7) où le granulat plastique (13) est introduit dans une conduite de transport (6) avec un gaz de transport (14) soumis à une pression, le gaz de transport présentant une humidité relative d'au moins 60 % et d'au plus 200 %,
- un lieu cible (16) en liaison de transport avec le lieu de chargement (7),
**caractérisée par**
- une unité de thermostatisation par condensation (15 ; 15a ; 15b ; 15c) disposée par tronçons le long de la conduite de transport (6) pour tempérer la conduite de transport (6) de telle sorte que l'humidité contenue dans le gaz de transport (14) soit condensée de manière ciblée sur une paroi intérieure (23) de la conduite de transport (6) pour former un film de glissement, l'unité de thermostatisation par condensation (15 ; 15a ; 15b ; 15c) s'étendant, à partir du lieu de chargement (7), le long de la conduite de transport (6) sur au moins 20 % de la longueur totale de la conduite de transport (6).

2. Installation de transport selon la revendication 1, **caractérisée en ce que** la conduite de transport (6), dans une section cible (29) orientée vers le lieu cible (16), est dépourvue de l'unité de thermostatisation par condensation (15 ; 15a ; 15b; 15c) et/ou présente une unité de thermostatisation par évaporation (42) pour tempérer la conduite de transport dans la section cible (29) afin d'éviter la condensation sur la paroi intérieure (23) de la conduite de transport (6), la section cible (29) présentant en particulier une longueur de section cible (lz) telle qu'une différence de pression de transport (Δp_{F,lZ}) le long de la section cible (29) représente au maximum 30 % d'une pression de transport totale (p_{F}).

3. Installation de transport selon l'une quelconque des revendications précédentes, **caractérisée en ce que** l'unité de thermostatisation par condensation (15 ; 15a ; 15b) présente au moins un élément passif, qui est réalisé en particulier comme élément d'ombrage (20), comme élément de refroidissement passif et/ou comme élément d'isolation thermique (26).

4. Installation de transport selon l'une quelconque des revendications précédentes, **caractérisée en ce que** l'unité de thermostatisation par condensation (15c) présente au moins un élément actif, qui est réalisé en particulier comme élément de chauffage actif et/ou comme élément de refroidissement actif (31).

5. Installation de transport selon l'une quelconque des revendications précédentes, **caractérisée par** une unité de régulation (35) pour la régulation de la température (Tiw) sur la paroi intérieure (23) de la conduite de transport (6) pour la formation du film de glissement, l'unité de régulation (35) étant en liaison de signalisation (36, 41) en particulier avec l'unité de thermostatisation par condensation (15 ; 15a ; 15b ; 15c) ainsi qu'avec au moins un capteur de température (37, 38, 39) et/ou avec un capteur (40) pour la mesure de l'humidité dans la conduite de transport (6) et/ou dans une conduite de gaz comprimé (12).

6. Installation de transport selon l'une quelconque des revendications précédentes, **caractérisée par** une unité de distribution (44) pour distribuer de manière ciblée le film de glissement (24) formé sur la paroi intérieure (23) de la conduite de transport (6), l'unité de distribution (44) étant disposée en particulier dans la zone de l'unité de thermostatisation par condensation (15 ; 15a ; 15b ; 15c).

7. Installation de transport selon la revendication 6, **caractérisée en ce que** l'unité de distribution (44) présente au moins une tôle de torsion (45) pour générer une torsion dans le flux de transport, ladite au moins une tôle de torsion (45) étant disposée à l'intérieur de la conduite de transport (6), en particulier le long d'une section rectiligne, en particulier orientée horizontalement, de la conduite de transport (6).

8. Installation de transport selon la revendication 6 ou 7, **caractérisée en ce que** l'unité de distribution (44) présente au moins un élément de déviation pour dévier un flux de liquide dans la conduite de transport (6), ledit au moins un élément de déviation étant réalisé en particulier sous forme de tôle de guidage, qui est fixée en particulier sur la paroi intérieure (23) de la conduite de transport (6), et/ou sous forme de rainure de guidage (46), qui est intégrée en particulier sur la paroi intérieure (23) de la conduite de transport (6), la rainure de guidage (46) étant réalisée en particulier sous forme d'estampage sur la paroi intérieure (23).

9. Installation de transport selon l'une quelconque des revendications 6 à 8, **caractérisée en ce que** l'unité de distribution (44) comprend au moins un élément d'injection de gaz (48) raccordé à la conduite de transport (6) pour l'injection supplémentaire d'un gaz pour la distribution du film de glissement (24).

10. Installation de transport selon l'une quelconque des revendications précédentes, **caractérisée en ce que,** en particulier dans la zone de l'unité de distribution (44), la paroi interne (23) de la conduite de transport (6) est réalisée avec une surface de mouillage hydrophile qui présente en particulier un angle de contact inférieur à 90°, en particulier inférieur à 50°, en particulier inférieur à 30°, en particulier inférieur à 10°.

11. Installation de transport selon l'une quelconque des revendications précédentes, **caractérisée par** une unité d'humidification (11) pour humidifier le gaz de transport (14) et/ou le granulat plastique (13) en ajoutant du liquide, en particulier au moyen d'un raccord de liquide séparé.

12. Procédé de transport pneumatique de granulat plastique, qui est du granulat de polyoléfine, qui est transporté au moyen d'un gaz de transport humide le long d'une conduite de transport (6) d'une installation de transport (1) selon l'une quelconque des revendications précédentes, d'un lieu de chargement (7) à un lieu cible (16), le gaz de transport humide présentant une humidité relative d'au moins 60 % et d'au plus 200 %, le gaz de transport humide (14) étant sursaturé pendant le transport au moins par zones le long de la conduite de transport (6), la conduite de transport (6) étant chauffée par sections au moyen d'une unité de thermostatisation par condensation (15 ; 15a ; 15b ; 15c) et un film de glissement (24) est formé sur une paroi intérieure (23) de la conduite de transport (6) par condensation de l'humidité contenue dans le gaz de transport (14).

13. Procédé selon la revendication 12, **caractérisé en ce qu'**une température Tiw sur la paroi interne (23) de la conduite de transport (6) est réglée en fonction d'une température T_{F} du flux de transport, où en particulier: Tiw - T_{F} = -100 K...+30 K, en particulier T_{IW} - T_{F} = -30 K...0 K et en particulier Tiw - T_{F} = 15 K...0 K, la température Tiw sur la paroi intérieure (23) de la conduite de transport (6) étant en particulier régulée au moyen d'une unité de régulation (35), l'unité de régulation (35) étant en particulier en liaison de signalisation (36, 41) avec l'unité de thermostatisation par condensation (15 ; 15a ; 15b ; 15c) ainsi qu'avec au moins un capteur de température (37, 38, 39) et/ou avec un capteur (40) pour la mesure de l'humidité dans la conduite de transport (40).

14. Procédé selon l'une quelconque des revendications 12 à 13, **caractérisé en ce que** la température Tiw sur la paroi intérieure (23) de la conduite de transport (6) le long d'une section cible (29) de la conduite de transport (6) orientée vers le lieu cible (16) est déterminée sans l'unité de thermostatisation par condensation (15 ; 15a ; 15b ; 15c) et/ou au moyen d'une unité de thermostatisation par évaporation (42) afin d'éviter la condensation sur la paroi intérieure (23) de la conduite de transport (6), la section cible (29) présentant en particulier une longueur de section cible (lz) telle qu'une différence de pression de transport (Δp_{F,lZ}) le long de la section cible (29) représente au maximum 30 % d'une pression de transport totale (p_{F}).

15. Procédé selon l'une quelconque des revendications 12 à 14, **caractérisé en ce que** du liquide est ajouté au granulat plastique (13) et/ou au gaz de transport (14) au moyen d'une unité d'humidification (11), en particulier au moyen d'un raccord de liquide séparé, en une quantité telle que le gaz de transport (14) est sursaturé de liquide pendant le transport, au moins par zones, le long de la conduite de transport (6).
